Europäisches Patentamt

European Patent Office

Office européen des brevets

(11) Veröffentlichungsnummer: **0 070 929 B1**

(12) **EUROPÄISCHE PATENTSCHRIFT**

(45) Veröffentlichungstag der Patentschrift:
**10.12.86**

(21) Anmeldenummer: **81201064.3**

(22) Anmeldetag: **25.09.81**

(51) Int. Cl.⁴: **A 01 N 43/70,** A 01 N 47/30 //
(A01N43/70, 37:48,
33:22),(A01N47/30, 37:48, 33:22)

(54) **Mittel zur selektiven Unkrautbekämpfung und seine Anwendung.**

(30) Priorität: **25.07.81 DE 3129432**

(43) Veröffentlichungstag der Anmeldung:
**09.02.83 Patentblatt 83/6**

(45) Bekanntmachung des Hinweises auf die Patenterteilung:
**10.12.86 Patentblatt 86/50**

(84) Benannte Vertragsstaaten:
**AT BE CH DE FR GB IT LI LU NL**

(56) Entgegenhaltungen:
**DE - B - 1 902 990**
**FR - A - 1 550 148**
**FR - A - 1 578 974**
**FR - A - 1 579 083**
**FR - A - 1 602 719**
**FR - A - 2 045 064**
**FR - A - 2 086 276**
**FR - A - 2 206 906**
**FR - A - 2 414 870**
**GB - A - 2 002 636**

**CHEMICAL ABSTRACTS, Band 83, Nr. 15, 13. Oktober 1975, Seite 159, Nr. 127491e,Columbus, Ohio, U.S.A.**

**Die Akte enthält technische Angaben, die nach dem Eingang der Anmeldung eingereicht wurden und die nicht in dieser Patentschrift enthalten sind.**

(73) Patentinhaber: **NORDDEUTSCHE AFFINERIE AG,**
**Alsterterrasse 2, D-2000 Hamburg 36 (DE)**

(72) Erfinder: **Ploss, Hartmut, Dr., Sierichstrasse 88,**
**D-2000 Hamburg 60 (DE)**
Erfinder: **Marzusch, Karl, Dr., Rehwinkel 3,**
**D-2070 Grosshansdorf (DE)**
Erfinder: **Maierhofer, Franz, Dipl.-Landwirt,**
**Sebastian-Kneipp-Strasse 14, D-2210 Itzehoe (DE)**

(74) Vertreter: **Rieger, Harald, Dr., Reuterweg 14,**
**D-6000 Frankfurt am Main (DE)**

## Beschreibung

Die vorliegende Erfindung betrifft ein Mittel zur selektiven Unkrautbekämpfung, das die beiden Wirkstoffe Bifenox und Chlortoluron enthält, sowie dessen Anwendung im Getreideanbau.

Es ist bereits bekannt, dass 4-Nitro-diphenyläther, wie z.B.
2,4-Dichlor-3-methoxycarbonyl-4-nitro-diphenyläther (Bifenox),
aufgrund ihrer Beeinflussung der Photosynthese herbizide Eigenschaften aufweisen (O.C. Burnside et al., Weed Sci Vol. 26 (2) (1978), S. 108 ff.). So können diese Phenyläther z.B. zur selektiven Unkrautbekämpfung in verschiedenen Nutzpflanzen, unter anderem in Getreidekulturen, sowohl im Vor- und Nachauflaufverfahren eingesetzt werden. Nachteilig ist jedoch, dass die Dosierung relativ niedrig (0,5–2 kg/ha) gehalten werden muss, da höhere Mengen auch einzelne Nutzpflanzenarten schädigen. In diesen geringen Dosierungen werden einige Unkrautarten, insbesondere Galium aparine und Matricaria-Arten, einige der wirtschaftlich bedeutsamsten Unkräuter in Getreidekulturen, aber nicht oder nur unzureichend erfasst.

Aus FR-A-2 414 870 sind herbizide Mischungen bekannt, deren Wirkstoffkomponente aus wenigstens drei verschiedenen Herbiziden besteht, beispielsweise aus einer Kombination von Bifenox, Chlortoluron und Terbutryn. Dem Referat 127 491 e in «Chem. Abstr.» Vol 83 sind Herbizidmischungen für den Einsatz in Reisfeldern aus zwei Wirkstoffen zu entnehmen, wobei der eine Wirkstoff Bifenox sein kann.

Aufgabe der Erfindung ist, ein Mittel zur selektiven Unkrautbekämpfung zu schaffen, das den vorgenannten Nachteil nicht aufweist und sich für die wirksamere Bekämpfung von Unkräutern eignet.

Die Aufgabe wird gelöst, indem ein zwei Wirkstoffe enthaltendes Mittel zur selektiven Unkrautbekämpfung, worin die eine Wirkstoffkomponente 2,4-Dichlor-3-methoxycarbonyl-4-nitrodiphenyläther (Bifenox) ist, derart formuliert wird, dass die zweite Wirkstoffkomponente 3-(3-Chlor-4-methylphenyl)-1,1-dimethylharnstoff (= Chlortoluron) ist.

Überraschenderweise ist die herbizide Wirksamkeit der erfindungsgemässen Wirkstoffkombination wesentlich höher als die Summe der Wirkungen der einzelnen Wirkstoffe. Ausserdem ist ihre Pflanzenverträglichkeit wesentlich günstiger als diejenige der bekannten 4-Nitro-diphenyläther-Herbizide bzw. -herbizidkombinationen.

Die erfindungsgemässen Mittel können entweder als Tankmischungen, bei denen die Wirkstoffkomponenten erst unmittelbar vor der Applikation miteinander vermischt werden, oder als Fertigformulierungen zur Anwendung gebracht werden. Sie können aber auch in die üblichen Formulierungen übergeführt werden, wie Spritzpulver, Emulsionen, Suspensionen, Granulate, wasserdispergierbare Granulate u.a., wobei sie dann ausser der Wirkstoffkombination noch die üblichen Formulierungshilfsmittel, wie z.B. Inertstoffe, Netz-, Dispergier- und Emulgiermittel, enthalten.

Die Einzelwirkstoffe 2,4-Dichlor-3-methoxycarbonyl-4-nitrodiphenyläther sowie 3-(3-Chlor-4-methylphenyl)-1,1-dimethylharnstoff lassen sich innerhalb weiter Grenzen miteinander kombinieren. Bevorzugt sind jedoch Mittel, in denen die Einzelwirkstoffe in einem Gewichtsverhältnis von 10:1 bis 1:10 stehen.

Die erfindungsgemässen Mittel können sowohl vor als auch nach dem Auflaufen der Pflanzen appliziert werden. Die Anwendung wird vorzugsweise vor dem Auflaufen der Pflanzen vorgenommen. Sie können auch vor der Saat in den Boden eingearbeitet werden. Die aufgewendete Wirkstoffmenge hängt im wesentlichen von der Art des gewünschten Unkrautbekämpfungsgrades ab. Im allgemeinen liegen die Aufwandmengen zwischen 1 und 10 kg Wirkstoff pro Hektar, vorzugsweise zwischen 2 und 5 kg/ha.

Mit Hilfe der erfindungsgemässen Mittel lassen sich zahlreiche Unkräuter in Nutzpflanzenkulturen, insbesondere in Getreidearten, wie Weizen, Roggen und Gerste, erfolgreich bekämpfen. Hierbei handelt es sich insbesondere um Dikotyle, wie Matricaria-Arten, Galium aparine, Stellaria media, Veronica-Arten, Lamium-Arten, Viola tricolor, Myosotis arvensis u.a. sowie um Monokotyle, wie Alopecurus myosuroides, Apera spica venti, Poa annua u.a.

Mit dem erfindungsgemässen Mittel ist eine besonders gute Bekämpfung der Unkrautarten Alopecurus myosuroides, Galium aparine, Matricaria ssp. und Veronica ssp. zu beobachten.

Die gute herbizide Wirkung des erfindungsgemässen Mittels wird anhand eines Beispiels näher und beispielsweise erläutert.

Während die einzelnen Wirkstoffe erhebliche Schwächen aufweisen, zeigen die erfindungsgemässen Mittel eine Bekämpfungswirkung, die über eine einfache Wirkungssummierung hinausgeht.

Aus der Tabelle geht eindeutig hervor, dass die gefundene herbizide Wirkung der erfindungsgemässen Mittel bei den Unkräutern überadditiv ist, d.h. es liegt ein synergistischer Effekt vor.

Zur Berechnung eines synergistischen Effektes wurde davon ausgegangen, dass ein rein additiver Effekt sich nach folgender Formel errechnet:

$$E = X + Y - \frac{X \cdot Y}{100}$$

(vgl. Colby, S.R., «Calculating synergistic and antagonistic responses of herbicide combinations», Weeds 15 (1967)).

E = der (bei additiver Wirkung) zu erwartende herbizide Wirkungsgrad (% Unkrautvernichtung) nach Anwendung der Herbizide A + B bei p + q kg Aufwand/ha

X = Wirkungsgrad (%) bei Anwendung des Wirkstoffes A mit p kg/ha

Y = Wirkungsgrad (%) bei Anwendung des Wirkstoffes B mit q kg/ha.

Liegt der experimentell gefundene Wert über dem gemäss vorliegender Formel errechneten Wert, so liegt ein Synergismus vor.

Aus den Beispielen 1 und 2 geht hervor, dass die gefundene herbizide Wirkung der erfindungsgemässen Mittel bei den Unkräutern grösser ist als die berechnete, d.h. es liegt ein echter synergistischer Effekt vor.

Beispiel 1

Es wurden 180 g
2,4-Dichlor-3-methoxycarbonyl-4-nitro-diphenyläther,
300 g
3-(3-Chlor-4-methylphenyl)-1,1-dimethyl-harnstoff (= Chlortoluron),

440 g Chiastolith, 5 g Calcium-Ligninsulfonat und 1,5 g eines Fettalkoholsulfonats, z.B. Texapon Z, vermischt und diese Mischung in einer Schlagkreuzmühle vermahlen. Das resultierende Produkt besass eine derartige Feinheit, dass bei der Siebung auf einem 44-Mikronsieb max. 1 Gewichtsprozent Rückstand verblieb. Die Suspendierbarkeit betrug 85% nach 30 Minuten Stehen in Wasser einer Härte von 19° dH.

Das so erhaltene Pulver wurde zur Anwendung in Wasser suspendiert und auf Wintergerste im Vorauflauf verspritzt.

Das Ergebnis der Versuche ist im Vergleich zur Anwendung der Einzelwirkstoffe und des nach der Formel errechneten Wertes in der nachfolgenden Tabelle zusammengestellt.

Tabelle (Beispiel 1)

| Wirkstoff bzw. Wirkstoffkombination | Wirkstoff-aufwand g/h | Unkraut ALOMY | | Unkraut GALAP | | Unkraut MATCH | |
|---|---|---|---|---|---|---|---|
| | | gef. | ber. | gef. | ber. | gef. | ber. |
| I(2,4-Dichlor-3-methoxycarbonyl-4-nitro-diphenyläther) | 960 | 0 | | 80 | | 70 | |
| II (Chlortoluron) | 2000 | 95 | | 0 | | 90 | |
| I + II | 960 + 2000 | 99 | 95 | 95 | 80 | 99 | 97 |

gef. = gefundene Schädigung des Unkrautes in %
ber. = nach der Formel berechnete Schädigung des Unkrautes in %

## Patentansprüche

1. Zwei Wirkstoffe enthaltendes Mittel zur selektiven Unkrautbekämpfung, worin die eine Wirkstoffkomponente
2,4-Dichlor-3-methoxycarbonyl-4-nitro-diphenyläther (Bifenox)
ist, dadurch gekennzeichnet, dass die zweite Wirkstoffkomponente
3-(3-Chlor-4-methylphenyl)-1,1-dimethyl-harnstoff (= Chlortoluron)
ist.

2. Mittel nach Anspruch 1, dadurch gekennzeichnet, dass die Einzelwirkstoffe in einem Gewichtsverhältnis von 10:1 bis 1:10 stehen.

3. Anwendung des Mittels gemäss Anspruch 1 oder 2 zur selektiven Unkautbekämpfung im Getreideanbau.

## Claims

1. Agent for use in selective controlling weed growth containing two effective substances the one of which is 2,4-dichloro-3-methoxycarbonyl-4-nitro-diphenyl ether (Bifenox) characterized in that the second effective substance is 3-(3-chloro-4-methylphenyl)-1,1-dimethyl urea (Chlortoluron).

2. Agent according to claim 1, characterized in that the individual effective substances are present in a proportion by weight of 10:1 to 1:10.

3. The use of the agent according to claims 1 or 2 in selective controlling weed growth in corn cultivation.

## Revendications

1. Agent contenant deux substances actives pour combattre sélectivement les mauvaises herbes, l'un des constituants actifs étant l'éther
2,4-dichloro-3-méthoxycarbonyl-4-nitro-diphénylique (Bifenox),
caractérisé en ce que le second constituant actif est la
3-(3-chloro-4-méthylphényl)-1,1-diméthyl-urée (Chlortoluron).

2. Agent suivant la revendication 1, caractérisé en ce que les substances actives individuelles sont présentes dans un rapport pondéral de 10:1 à 1:10.

3. Application de l'agent suivant la revendication 1 ou 2, pour combattre sélectivement les mauvaises herbes dans des cultures céréalières.